# EUROPEAN PATENT APPLICATION

(11) **EP 4 604 236 A1**
(43) Date of publication of application: **20.08.2025**
(21) Application number: 25157438.0
(22) Date of filing: 12.02.2025
(51) Int. Cl.: H01M 10/04, H01M 50/46, H01M 50/466

(54) **ELECTRODE ASSEMBLY AND CYLINDRICAL SECONDARY BATTERY INCLUDING THE ELECTRODE ASSEMBLY**

(30) Priority: 16.02.2024 KR 20240022893
(71) Applicant: SAMSUNG SDI CO., LTD., Yongin-si, Gyeonggi-do 17084 (KR)
(72) Inventor: LEE, Jiho, 17084 Yongin-si (KR)
(74) Representative: Marks & Clerk LLP

(57) **Abstract**

An electrode assembly includes a first electrode plate, a first separator in contact with the first electrode plate, a second separator in contact with the first separator, and a second electrode plate in contact with the second separator.

## Description

### BACKGROUND

### (a) Field

The present disclosure relates to an electrode assembly and a cylindrical secondary battery including the electrode assembly.

### (b) Description of the Related Art

Unlike a primary battery that cannot be charged, a secondary battery can be charged and discharged. A low-capacity secondary battery having a single electrode assembly packaged in the form of a pack is used for a small-sized portable electronic device, such as a mobile phone or a camcorder. A high-capacity secondary battery having several tens of electrode assemblies connected to each other is widely used as a power source for motor driving, such as in an electric scooter, a hybrid vehicle, or an electric vehicle.

A secondary battery is manufactured in various shapes. Among these, a cylindrical secondary battery includes an electrode assembly, a cylindrical can that accommodates the electrode assembly and an electrolyte solution, and a cap assembly that is coupled to an upper-end opening portion of the can to seal the can, with the cap assembly allowing current generated from the electrode assembly to flow to an external device.

In a typical cylindrical secondary battery, a negative electrode repeatedly undergoes relatively large contraction and expansion. In the cylindrical secondary battery, a deformation force caused by the contractions and expansions is not resolved, resulting in deformation inside the electrode assembly.

### SUMMARY OF THE DISCLOSURE

An aspect of the present disclosure is to provide an electrode assembly that can prevent deformation from occurring in the electrode assembly, and a cylindrical secondary battery including the electrode assembly.

An electrode assembly according to an embodiment of the present disclosure includes a first electrode plate, a first separator in contact with the first electrode plate, a second separator in contact with the first separator, and a second electrode plate in contact with the second separator.

The first separator and the second separator may be longer than the first electrode plate and the second electrode plate.

The lengths of the first separator and the second separator may be the same.

The lengths of first electrode plate and the second electrode plate may be the same.

A thickness of the first separator may be within a range from 4 µm to 8 µm.

A thickness of the second separator may be within a range from 4 µm to 8 µm.

The first electrode plate may be a negative electrode plate, and the second electrode plate may be a positive electrode plate.

The first electrode plate may be a positive electrode plate, and the second electrode plate may be a negative electrode plate.

An electrode assembly according to another embodiment of the present invention includes a first electrode plate, a second electrode plate positioned spaced apart from the first electrode plate, and a separator interposed between the first electrode plate and the second electrode plate, with the separator being in a folded state.

The first electrode plate, the separator, and the second electrode plate may be wound while overlapping each other, and a folded portion of the separator may be positioned on an innermost side in the wound state of the first electrode plate, the separator, and the second electrode plate.

The first electrode plate, the separator, and the second electrode plate may be wound while overlapping each other, and
a folded portion of the separator may be positioned on an outermost side in the wound state of the first electrode plate, the separator, and the second electrode plate.

The separator may be folded at a middle portion of the separator.

A length of the separator may be made to be two times longer than a relatively longer length of the first electrode plate and the second electrode plate.

The first electrode plate and the second electrode plate may have lengths that are the same.

A thickness of the separator may be within a range from 4 µm to 8 µm.

The first electrode plate may be a negative electrode plate, and the second electrode plate may be a positive electrode plate.

The first electrode plate may be a positive electrode plate, and the second electrode plate may be a negative electrode plate.

A cylindrical secondary battery according to an embodiment of the present disclosure includes an electrode assembly, a cylindrical can configured to accommodate the electrode assembly, and a cap assembly coupled to one side of the cylindrical can.

At least some of the above and other features of the invention are set out in the claims.

The electrode assembly according to an embodiment of the present disclosure includes the first separator and the second separator, so when contraction or expansion occurs inside the electrode assembly, slip may occur between the first separator and the second separator. Accordingly, the secondary battery including the electrode assembly can facilitate unwinding of the wound state, rewinding, and the like by contraction and expansion between the first electrode plate and the second electrode plate and prevent deformation from occurring in the electrode assembly by relieving the stress due to the contractions and expansions.

### BRIEF DESCRIPTION OF THE DRAWINGS

FIG. 1 is a cross-sectional view showing a cylindrical secondary battery.
FIG. 2 is an exploded perspective view showing the cylindrical secondary battery of FIG. 1.
FIG. 3 is a cross-sectional view showing an inside of an electrode assembly according to an embodiment of the present disclosure.
FIG. 4 is a cross-sectional view showing the electrode assembly in a developed manner.
FIG. 5 is a cross-sectional view showing a state in which slip occurs between a first separator and a second separator of the electrode assembly.
FIG. 6 is a cross-sectional view showing an electrode assembly according to an embodiment.

### DETAILED DESCRIPTION OF THE EMBODIMENTS

Hereinafter, preferred embodiments of the present disclosure will be described in detail with reference to the accompanying drawings. The terms or words used throughout the specification and the claims should not be construed as being limited to their ordinary or dictionary meanings, but as having meanings and concepts consistent with the technical idea of the present disclosure, based on the principle that an inventor may properly define the concepts of the words or terms to best explain the disclosure. Therefore, the embodiments described herein and the configurations shown in the drawings are some of the most preferred embodiments of the present disclosure, but are not intended to fully describe the technical aspects of the present disclosure, so it should be understood that a variety of other equivalents and variations could have been made thereto at the time of the filing of the application.

Additionally, the terms "comprise," "include," "comprising," and/or "including," when used in this specification, specify the presence of the stated features, integers, steps, operations, members, elements, and/or groups thereof, but do not preclude the presence or addition of one or more other features, integers, steps, operations, members, elements, and/or groups thereof.

Additionally, in order to help the understanding of the disclosure, the accompanying drawings may illustrate some elements in exaggerated dimensions, not in actual scale. Furthermore, the same element in different embodiments may be given the same reference numeral.

The statement that two comparison targets are equal refers to 'substantially equal'. Accordingly, substantially equal may include the deviation regarded as a low level in the art, for example, the deviation of 5% or less. In addition, a uniform parameter in a predetermined region may refer to uniform from the average point of view.

The terms "first", "second" and the like are used to describe a variety of elements, but these elements are not limited by the terms. These terms are used to distinguish one element from another, and unless the context clearly indicates otherwise, a first element may be a second element.

Throughout the disclosure, each constitutional element may be singular or plural, unless the context clearly indicates otherwise.

It will be understood that when an element is referred to being "on (or below)" or "above (or under)" another element, it can be positioned in contact with an upper surface (or a lower surface) of the other element, but another element may be positioned between the element and the other element on (or below) the element.

It will be also understood that when an element is referred to as being "on", "connected to" or "coupled to" another element, the elements can be directly connected or joined to each other, but intervening elements may be present between them or each element may be "connected", "coupled" or "joined" to each other through another element.

As used herein, the term "and/or" includes any one or more or all combinations of the associated listed items. Additionally, the use of "may" when describing embodiments of the present disclosure refers to "one or more embodiments of the present disclosure."

Expressions such as "one or more" and "at least one" preceding a list of elements modify the entire list of elements and do not modify the individual elements of the list.

Throughout the disclosure, the phrase "A and/or B" as used herein can denote A, B or A and B, and the phrase "C to D" can denote C or greater and D or less, unless the context clearly indicates otherwise.

When a phrase such as "at least one of A, B and C", "at least one of A, B or C", "at least one selected from the group of A, B and C" and "at least one selected from A, B and C" is used to specify a list of elements A, B, and C, the phrase may refer to any and all suitable combinations.

As used herein, the term "use" may be considered synonymous with the term "utilize."

As used herein, the term "substantially," "about," and similar terms are used as terms of approximation and not as terms of degree, and are intended to account for the inherent deviations in measured or calculated values that would be recognized by those of ordinary skill in the art.

It will be understood that, although the terms "first," "second," "third," and the like, may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

Spatially relative terms, such as "beneath," "below," "lower," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the drawings. For example, if the device in the drawings is turned over, elements described as "below" or "beneath" other elements would then be understood "above" the other elements. Accordingly, the term "below" can encompass both orientations of above and below.

The terms used herein are for describing embodiments of the present disclosure and are not intended to limit the present disclosure.

Hereinafter, before describing an electrode assembly according to an embodiment of the present disclosure with reference to the accompanying drawings, a cylindrical secondary battery to which the electrode assembly may be applied will be described in detail.

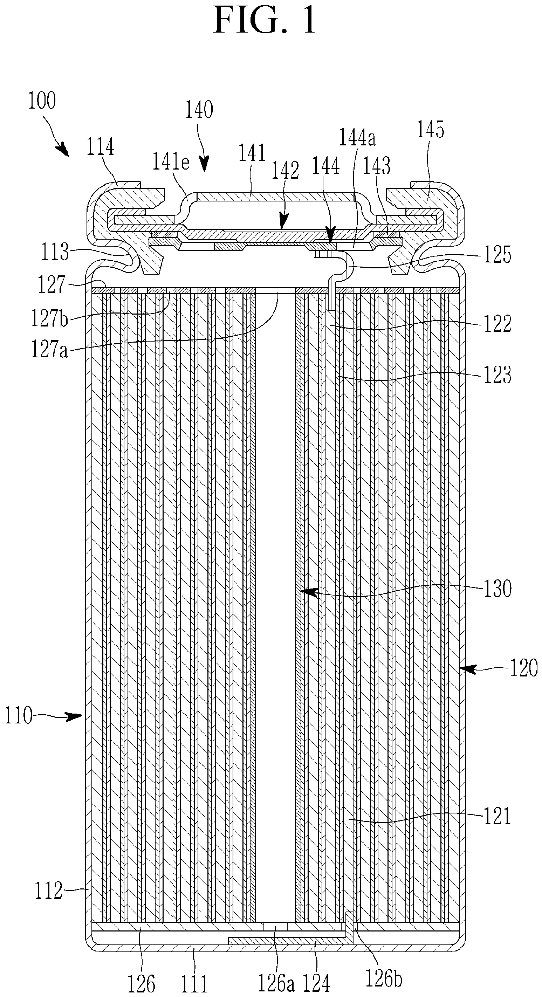

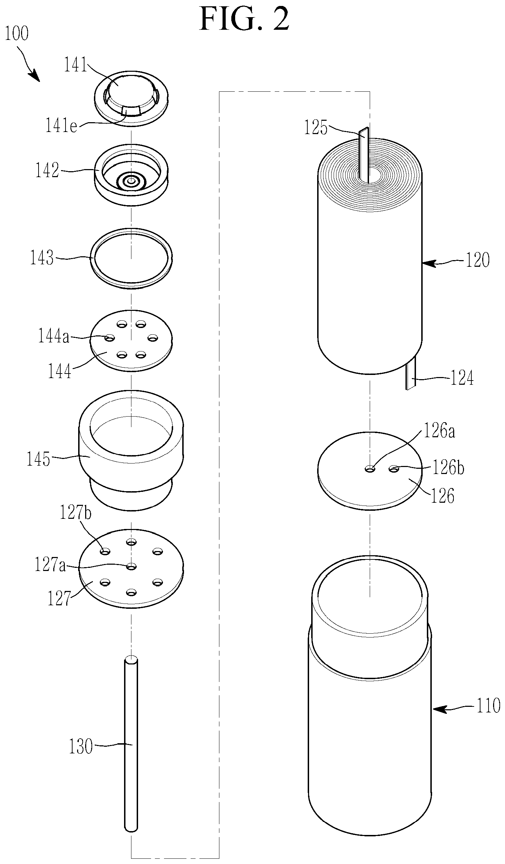

FIG. 1 is a cross-sectional view showing a cylindrical secondary battery, and FIG. 2 is an exploded perspective view showing the cylindrical secondary battery of FIG. 1.

As shown in FIGS. 1 and 2, a cylindrical secondary battery 100 includes a cylindrical can 110, an electrode assembly 120, and a cap assembly 140.

The cylindrical can 110 may include a circular bottom portion 111 and a cylindrical side portion 112 extending upward from the bottom portion 111 for a predetermined length. During a manufacturing process of the cylindrical secondary battery 100, a top portion of the cylindrical can 110 is open. Therefore, during an assembly process of the cylindrical secondary battery, the electrode assembly 120 may be inserted into the cylindrical can 110 together with an electrolyte solution.

The cylindrical can 110 may be made of steel, a steel alloy, aluminium, an aluminium alloy, or an equivalent thereof. The cylindrical can 110 may be provided with a beading portion 113 inwardly recessed around the cap assembly 140 and below the cap assembly 140 to prevent the electrode assembly 120 and the cap assembly 140 from deviating toward outside of the cylindrical can 110. An inwardly bent crimping portion 114 may be provided above the cap assembly.

The electrode assembly 120 may be accommodated inside the cylindrical can 110. The electrode assembly 120 includes a first electrode plate 121, a second electrode plate 122, and a twofold separator 123 interposed between the first electrode plate 121 and the second electrode plate 122. The electrode assembly 120 has an internal space on the innermost side as the first electrode plate 121, the second electrode plate 122, and the twofold separator 123 are wound.

The first electrode plate 121 may be a negative electrode plate. In such a case, the second electrode plate 122 may be a positive electrode plate. Conversely, the first electrode plate 121 may be a positive electrode plate, and the second electrode plate 122 may be a negative electrode plate. For convenience, the description below will be of configuration wherein the first electrode plate 121 is a negative electrode plate and the second electrode plate 122 is a positive electrode plate.

The negative electrode plate 121 is coated with a negative electrode active material (for example, graphite, carbon, or the like). The positive electrode plate 122 is coated with a positive electrode active material (for example, a transition metal oxide such as LiCoO₂, LiNiO₂, LiMn₂O₄, or the like).

The separator 123 is positioned between the negative electrode plate 121 and the positive electrode plate 122 to prevent a short circuit and allow migration of lithium ions. The separator 123 included in the electrode assembly 120 of the cylindrical secondary battery 100 according to an embodiment of the present disclosure may have a folded structure, which will be described in detail below.

The negative electrode plate 121, the positive electrode plate 122, and the separator 123 may be wound in a substantially cylindrical shape. The negative electrode plate 121 may include a copper (Cu) or nickel (Ni) foil, the positive electrode plate 122 may include an aluminium (Al) foil, and the separator 123 may include polyethylene (PE) or polypropylene (PP).

A negative electrode tab 124 protruding and extending downwardly for a predetermined length may be welded to the negative electrode plate 121, and a positive electrode tab 125 protruding upwardly for a predetermined length may be welded to the positive electrode plate 122. However, the positions of the negative electrode tab 124 and the positive electrode tab 125 may be switched. The negative electrode tab 124 may include a copper or nickel material, and the positive electrode tab 125 may include an aluminium material.

The negative electrode tab 124 of the electrode assembly 120 may be welded to the bottom portion 111 of the cylindrical can 110. Thus, the cylindrical can 110 may operate as a negative electrode. Conversely, the positive electrode tab 125 may be welded to the bottom portion 111 of the cylindrical can 110, and in such a case, the cylindrical can 110 may operate as a positive electrode.

A first insulating plate 126 may be interposed between the electrode assembly 120 and the bottom portion 111. The first insulating plate 126 is coupled to the cylindrical can 110, has a first hole 126a formed at its center, and has a second hole 126b formed on an outer side of the first hole 126a. The first insulating plate 126 may prevent the electrode assembly 120 from being brought into electrical contact with the bottom portion 111 of the cylindrical can 110.

More specifically, the first insulating plate 126 may prevent the positive electrode plate 122 of the electrode assembly 120 from being brought into electrical contact with the bottom portion 111. The first hole 126a may allow gas to rapidly move upward through a center pin 130 when gas is generated in large amounts due to an abnormality in the cylindrical secondary battery. The negative electrode tab 124 may extend through the second hole 126b and may be welded to the bottom portion 111.

A second insulating plate 127 may be interposed between the electrode assembly 120 and the cap assembly 140. The second insulating plate 127 is coupled to the cylindrical can 110, and has a first hole 127a formed at a center and a plurality of second holes 127b formed on an outer side of the first hole 127a.

The second insulating plate 127 may prevent the electrode assembly 120 from being brought into electrical contact with the cap assembly 140. More specifically, the second insulating plate 127 may prevent the negative electrode plate 121 of the electrode assembly 120 from being brought into electrical contact with the cap assembly 140.

The first hole 127a may allow gas to rapidly move to the cap assembly 140 when the gas is generated in large amounts due to an abnormality in the cylindrical secondary battery. One of the second holes 127b may allow the positive electrode tab 125 to pass therethrough so that the positive electrode tab 125 can be welded to the cap assembly 140. In addition, the remaining second holes 127b may allow an electrolyte solution to rapidly flow into the electrode assembly 120 during an electrolyte solution injection process.

Note that a diameter of each of the first hole 126a of the first insulating plate 126 and the first hole 127a of the second insulating plate 127 may be less than a diameter of the center pin 130. Accordingly, the center pin 130 may not be brought into electrical contact with the bottom portion 111 of the cylindrical can 110 or the cap assembly 140 due if there is an external impact to the secondary battery 100.

The center pin 130 has a hollow circular pipe shape and may be coupled to an approximate center of the electrode assembly 120. The center pin 130 may be made of steel, a steel alloy, aluminium, an aluminium alloy, or polybutylene terephthalate.

The center pin 130 may suppress deformation of the electrode assembly 120 during charging and discharging of the battery. The center pin 130 also provides a path for moving gases generated inside the cylindrical secondary battery. In some cases, the center pin 130 may be omitted.

The cap assembly 140 may include a upper cap 141 with a plurality of through holes 141e being formed therein, a safety vent 142 positioned below the upper cap 141, a connecting ring 143 positioned below the safety vent 142, and a lower cap 144 positioned below the safety vent 142 and the connecting ring 143. The lower cap 144 may include a plurality of through holes 144a and be electrically connected to the positive electrode tab 125. The lower cap 144 is arranged on a side of the cap assembly 140 that is opposite to the upper cap 141 with the safety vent 142 interposed therebetween.

The cap assembly 140 may further include an insulating gasket 145. The insulating gasket 145 insulates the upper cap 141, the safety vent 142, and the lower cap 144 from the side portion 112 of the cylindrical can 110. The insulating gasket 145 may be substantially compressed between the beading portion 113 and the crimping portion 114 that is formed substantially at the side portion 112 of the cylindrical can 110.

The through holes 141e of the upper cap 141 and the through holes 144a of the lower cap 144 may serve to discharge internal gases to outside of the secondary battery 100 when an abnormal internal pressure is generated inside the cylindrical can 110. The internal gases moving through the through holes 144a invert the safety vent 142 upwardly so that the safety vent 142 is electrically disconnected from the lower cap 144 and is ruptured, and the internal gases may be discharged to outside of the secondary battery 100 through the through holes 141e of the upper cap 141.

An electrolyte solution (not shown in the drawing) may be injected into the cylindrical can 110, which allows lithium ions generated by an electrochemical reaction taking place between the negative electrode plate 121 and the positive electrode plate 122 in the battery during charging and discharging to move. The electrolyte solution may be a non-aqueous, organic electrolyte solution that is a mixture of a lithium salt and a high-purity organic solvent. The electrolyte solution may include a polymeric electrolyte using a polymer or a solid electrolyte.

Note that the electrode assembly 120 according to an embodiment of the present disclosure is not limited to being applicable only to the above-described cylindrical secondary battery, and can also be applied to cylindrical secondary batteries in general.

Below, an electrode assembly according to an embodiment of the present disclosure will be described in detail with reference to the drawings.

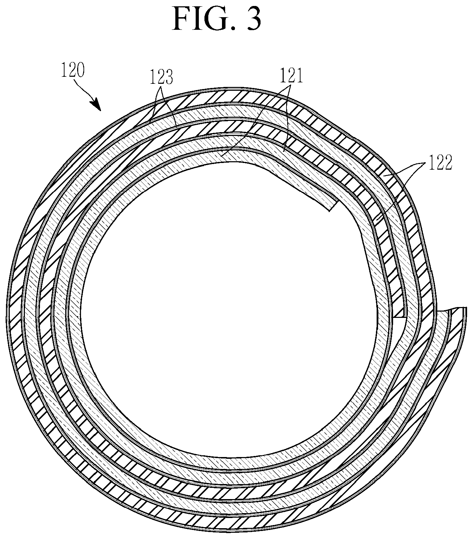

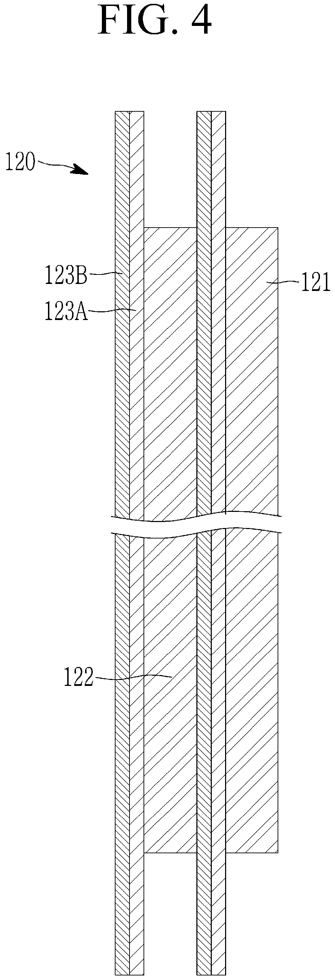

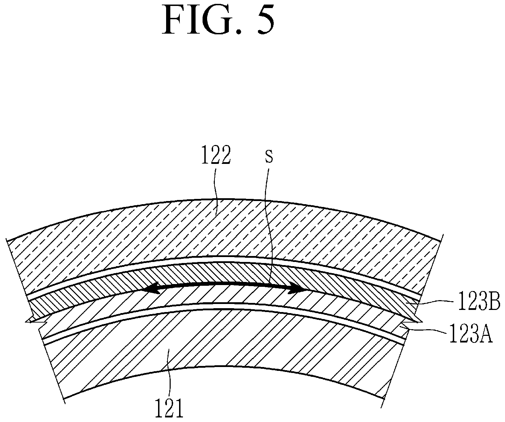

FIG. 3 is a cross-sectional view showing an inside of an electrode assembly according to an embodiment of the present disclosure, FIG. 4 is a cross-sectional view showing the electrode assembly in a developed manner, and FIG. 5 is a cross-sectional view showing a state in which slip occurs between a first separator and a second separator of the electrode assembly.

Referring to FIGS. 3 to 5, the electrode assembly 120 according to an embodiment of the present disclosure includes a first electrode plate 121, a first separator 123A in contact with the first electrode plate 121, a second separator 123B in contact with the first separator 123A, and a second electrode plate 122 in contact with the second separator 123B.

In the electrode assembly 120, the first separator 123A and the second separator 123B are arranged in close contact with each other between the first electrode plate 121 and the second electrode plate 122. In this state, the electrode assembly 120 may be wound in the form of a jelly roll. That is, the first separator 123A and the second separator 123B may be installed over an entire section of the electrode assembly 120, not over a partial section.

Generally, a coefficient of friction between a separator and a positive electrode plate is 0.838, and a coefficient of friction between the separator and a negative electrode plate is 0.276. A coefficient of friction between the first separator and the second separator is 0.244. As such, the coefficient of friction between the two separators is relatively low.

The electrode assembly 120 according to an embodiment of the present disclosure includes the first separator 123A and the second separator 123B, so when contraction and expansion occurs inside the electrode assembly 120, slip (S) may occur between the first separator 123A and the second separator 123B (see FIG. 5). Accordingly, the cylindrical secondary battery 100 including the electrode assembly 120 according to an embodiment of the present disclosure can facilitate unwinding of the wound state, rewinding and the like by contraction and expansion between the first electrode plate 121 and the second electrode plate 122 and prevent deformation from occurring in the electrode assembly 120 by relieving the stress due to the contraction and expansion.

Here, the first separator 123A and the second separator 123B may be made to be longer than the first electrode plate 121 and the second electrode plate 122. Accordingly, stable insulation is provided between the first electrode plate 121 and the second electrode plate 122. In this case, the first separator 123A and the second separator 123B may have lengths corresponding to each other. That is, the overall lengths of the first separator 123A and the second separator 123B may be the same.

Additionally, the first electrode plate 121 and the second electrode plate 122 may have lengths corresponding to each other. That is, the overall lengths of the first electrode plate 121 and the second electrode plate 122 may be the same.

Note that a thickness of a separator included in a cylindrical secondary battery of the related art that is a single separator may be about 14 µm. In the electrode assembly 120 according to an embodiment of the present disclosure, a thickness of the first separator 123A may be within a range from 4 µm to 8 µm, and a thickness of the second separator 123B may be within a range from 4 µm to 8 µm. Accordingly, even if the electrode assembly 120 includes the first separator 123A and the second separator 123B, a size of the electrode assembly 120 may not be increased compared to the size of an electrode assembly in a cylindrical secondary battery of the related art.

Note that, unlike the above description, in order to prevent deformation from occurring inside the electrode assembly, a method of reducing the coefficient of friction between the positive electrode plate and the negative electrode plate while using a single separator may also be used. To this end, a separately manufactured special separator may be used, but this method has a problem of increasing the manufacturing cost of the cylindrical secondary battery because the cost of the separator is higher than that of a general separator.

On the other hand, since a separately manufactured single separator is not used when manufacturing the electrode assembly 120 according to an embodiment of the present disclosure, an increased manufacturing cost prevented. In addition, by arranging the twofold separator (123A, 123B) between the first electrode plate 121 and the second electrode plate 122 without performing an additional process in the manufacturing method, the manufacturing cost may be similar to the manufacturing cost of the cylindrical secondary battery of the related art.

In addition, when the cylindrical secondary battery 100 has been used and should be discarded, the electrode assembly 120 can be easily separated because the first separator 123A and the second separator 123B overlap each other. Accordingly, the work of recovering waste batteries can be carried out more easily.

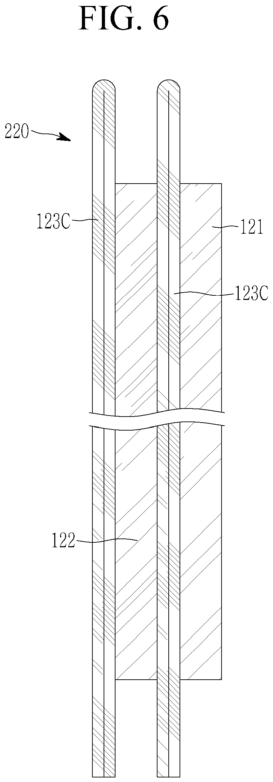

FIG. 6 is a cross-sectional view showing an electrode assembly according to another embodiment.

Referring to FIG. 6, an electrode assembly 220 according to an embodiment of the present disclosure includes a third separator 123C. The third separator 123C is interposed between the first electrode plate 121 and the second electrode plate 122 in a partially folded (twofold) state.

In the electrode assembly 120 described above (see FIG. 4), the first separator 123A and the second separator 123B, which are separated from each other, are stacked. However, in the electrode assembly 220 according to this embodiment, the third separator 123C is interposed between the first electrode plate 121 and the second electrode plate 122 in a state with a middle portion of the third separator being folded. Accordingly, the third separator 123C may include a folded portion, in particular, the middle portion of the third separator 123C may be folded.

As described above, the first electrode plate 121, the third separator 123C, and the second electrode plate 122 are wound in an overlapping state.

Although not shown in FIG. 6, the folded portion of the third separator 123C may be positioned on the innermost side in the wound state of the first electrode plate 121, the third separator 123C, and the second electrode plate 122. That is, the folded portion of the third separator 123C may be positioned on the innermost side of the electrode assembly 220.

On the other hand, the folded portion of the third separator 123C may be positioned on the outermost side in a wound state of the first electrode plate 121, the third separator 123C, and the second electrode plate 122. That is, the folded portion of the third separator 123C may be positioned on the outermost side of the electrode assembly 220. Accordingly, the folded portion of the third separator 123C may be positioned in a space between the cylindrical can and the electrode assembly 220.

Note that a length of the third separator 123C may be made to be two times longer than a longer length of the first electrode plate 121 and the second electrode plate 122. Accordingly, even if the third separator 123C is folded and the entire length thereof becomes 1/2 of its unfolded length, the third separator 123C may be longer than the first electrode plate 121 and/or the second electrode plate 122.

Here, the first electrode plate 121 and the second electrode plate 122 may have lengths corresponding to each other. That is, as described above, the overall lengths of the first electrode plate 121 and the second electrode plate 122 may be the same.

Note that a thickness of the third separator 123C may be within a range from 4 µm to 8 µm. Accordingly, the total thickness of the folded third separator 123C may be 8 µm to 16 µm, which is similar to a thickness of a single separator included in a general electrode assembly. Thus, the size of the electrode assembly 220 according to this embodiment may not be increased compared to the cylindrical secondary battery of the related art in the same manner that the size of the electrode assembly 120 (see FIG. 4) described above is not increased compared to the related art.

As described above, in the electrode assembly 220 according to an embodiment of the present disclosure, the third separator 123C is arranged between the first electrode plate 121 and the second electrode plate 122 in a folded (twofold) state. Therefore, unwinding of the wound state, rewinding, and the like by contraction and expansion between the first electrode plate 121 and the second electrode plate 122 can proceed smoothly, and deformation can be prevented from occurring in the electrode assembly 220 by relieving the stress due to the contraction and expansion.

Although the various embodiments of the present disclosure have been described, the drawings and the detailed description of the disclosure referenced so far are merely illustrative of the present disclosure, are used only for the purpose of describing the present disclosure, and are not intended to define the meanings thereof or to limit the scope of the present disclosure set forth in the claims. Therefore, one skilled in the art will understand that various variations and other equivalent embodiments are possible from the drawings and the detailed description. Consequently, the true technical protective scope of the present disclosure should be determined based on the technical scope of the attached claims.

### <Description of symbols>

100: cylindrical secondary battery
110: cylindrical can
120, 220: electrode assembly
121: first electrode plate
122: second electrode plate
123: separator
123A: first separator
123B: second separator
123C: third separator
140: cap assembly

## Claims

1. An electrode assembly comprising:
a first electrode plate;
a first separator in contact with the first electrode plate;
a second separator in contact with the first separator; and
a second electrode plate in contact with the second separator.

2. The electrode assembly of claim 1, wherein the first separator and the second separator are longer than the first electrode plate and the second electrode plate.

3. The electrode assembly of claim 1 or claim 2, wherein lengths of the first separator and the second separator are the same.

4. The electrode assembly of any one of claims 1 to 3, wherein lengths of the first electrode plate and the second electrode plate are the same.

5. The electrode assembly of any one of claims 1 to 4, wherein a thickness of the first separator is within a range from 4 µm to 8 µm.

6. The electrode assembly of any one of claims 1 to 5, wherein a thickness of the second separator is within a range from 4 µm to 8 µm.

7. The electrode assembly of any one of claims 1 to 6, wherein:
(i) the first electrode plate is a negative electrode plate, and the second electrode plate is a positive electrode plate; or
(ii) the first electrode plate is a positive electrode plate, and the second electrode plate is a negative electrode plate.

8. An electrode assembly comprising:
a first electrode plate;
a second electrode plate spaced apart from the first electrode plate; and
a separator interposed between the first electrode plate and the second electrode plate, with the separator being in a folded state.

9. The electrode assembly of claim 8, wherein:
(i) the first electrode plate, the separator, and the second electrode plate are wound while overlapping each other such that a folded portion of the separator is positioned on an innermost side in the wound state of the first electrode plate, the separator, and the second electrode plate; or
(ii) the first electrode plate, the separator, and the second electrode plate are wound while overlapping each other, and
wherein a folded portion of the separator is positioned on an outermost side in the wound state of the first electrode plate, the separator, and the second electrode plate.

10. The electrode assembly of claim 8 or claim 9, wherein the separator is folded at a middle portion of the separator.

11. The electrode assembly of any one of claims 8 to 10, wherein a length of the separator is two times longer than a length of the first electrode plate and the second electrode plate.

12. The electrode assembly of any one of claims 8 to 11, wherein lengths of the first electrode plate and the second electrode plate are the same.

13. The electrode assembly of any one of claims 8 to 12, wherein a thickness of the separator is within a range from 4 µm to 8 µm.

14. The electrode assembly of any one of claims 8 to 13, wherein
(i) the first electrode plate is a negative electrode plate, and the second electrode plate is a positive electrode plate; or
(ii) the first electrode plate is a positive electrode plate, and the second electrode plate is a negative electrode plate.

15. A cylindrical secondary battery comprising:
an electrode assembly according to any one of claims 1 to 14;
a cylindrical can accommodating the electrode assembly; and
a cap assembly coupled to one side of the cylindrical can.
